# EUROPÄISCHE PATENTANMELDUNG

(11) **EP 2 955 070 A2**
(43) Veröffentlichungstag der Anmeldung: **16.12.2015**
(21) Anmeldenummer: 15167522.0
(22) Anmeldetag: 13.05.2015
(51) Int. Cl.: B60S 3/04, C11D 1/825, C11D 1/94, C11D 3/37

(54) **VERFAHREN ZUM REINIGEN UND POLIEREN EINES FAHRZEUGS, FAHRZEUGBEHANDLUNGSANLAGE UND REINIGUNGS- UND POLIERMITTEL**

(30) Priorität: 19.05.2014 DE 102014107056
(71) Anmelder: WashTec Holding GmbH, 86153 Augsburg (DE)
(72) Erfinder: Gleich, Peter, 36341 Lauterbach-Maar (DE); Torquato, Antonio, 86441 Zusmarshausen (DE)
(74) Vertreter: Charrier, Rapp & Liebau

(57) **Zusammenfassung**

Die Erfindung betrifft ein Verfahren zum Reinigen und Polieren eines Fahrzeugs in einer Fahrzeugbehandlungsanlage, eine Fahrzeugbehandlungsanlage sowie ein kombiniertes wässriges Reinigungs- und Poliermittel. Die Erfindung löst die Aufgabe, den zeitlichen Einsatz von Bürsten zu vermindern, den Reinigungs- und Politurvorgang zu vereinfachen und zu beschleunigen, um einen höheren Durchsatz an Fahrzeugen durch die Behandlungsanlage zu ermöglichen, sowie eine Vereinfachung der Fahrzeugbehandlungsanlage und somit eine Reduktion der Kosten für die Anlage und deren Betrieb zu erreichen, durch ein Verfahren zum Reinigen und Polieren eines Fahrzeugs mit den Schritten a) Applizieren eines kombinierten Reinigungs- und Poliermittels auf die Fahrzeugoberflächen des zu behandelnden Fahrzeugs (F), und b) Reinigen und Polieren der bereits mit Reinigungs- und Poliermittel versehenen Fahrzeugoberflächen noch während und/oder unmittelbar nach dem Applizieren des Reinigungs- und Poliermittels auf diese Fahrzeugoberflächen, ein kombiniertes wässriges Reinigungs- und Poliermittel umfassend einen oder mehrere als Glanzbildner und Lackpflege wirkende(n) Stoff(e), ein Wasch- und Reinigungssystem, das ein Reinigungs- und Dispergiersystem und einen Schaumbildner umfasst, und ggf. ein pHeinstellendes Mittel, ggf. einen Lösevermittler, und ggf. zusätzliche Hilfsstoffe, sowie eine Fahrzeugbehandlungsanlage (9; 10; 21) zur Durchführung des Verfahrens.

## Beschreibung

Die Erfindung betrifft ein Verfahren zum Reinigen und Polieren eines Fahrzeugs in einer Fahrzeugbehandlungsanlage nach dem Oberbegriff des Anspruchs 1, eine Fahrzeugbehandlungsanlage zur Durchführung des Verfahrens sowie ein kombiniertes wässriges Reinigungs- und Poliermittel, das Reinigungs- und Polier-Funktionen in sich vereinigt, insbesondere zur Verwendung in dem erfindungsgemäßen Verfahren.

Bekannt sind Verfahren zum Reinigen und Polieren eines Fahrzeugs in Fahrzeugbehandlungsanlagen, insbesondere Fahrzeugwaschanlagen für PKWs und LKWs.

Der Begriff "Polieren" bezeichnet hier und im nachfolgenden den Vorgang, bei dem ein Pflegemittel, auch Poliermittel oder Politur genannt, über ein mechanisches Hilfsmittel (z.B. Bürsten) großflächig und gleichmäßig auf den Oberflächen des Fahrzeugs verteilt wird. Darüber hinaus entfaltet die Politur durch das "Einmassieren" bzw. das "mechanische Glanzpolieren" seine volle Glanzwirkung. Dabei bezeichnet das Wort "Poliermittel" oder "Politur" das Mittel, welches verwendet wird, um eine Glanzsteigerung während der Fahrzeugbehandlung zu erreichen. Das Poliermittel enthält keine abrasiven und/oder lacklösenden Inhaltsstoffe und dient nur der Lackpflege und Glanzgebung.

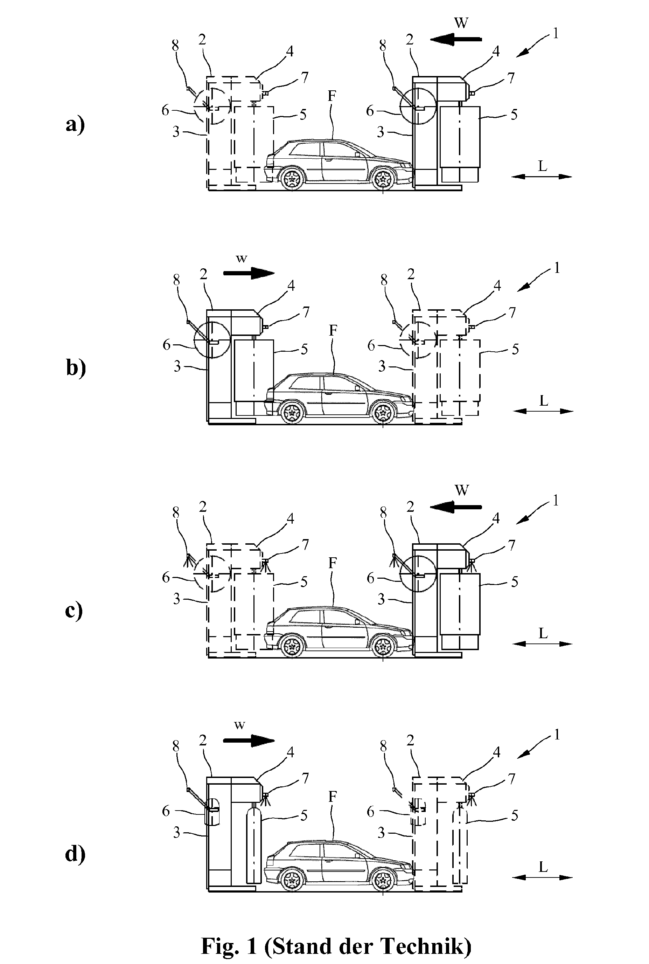

Ein Beispiel für eine solche Fahrzeugbehandlungsanlage 1 ist in Fig. 1 in Form einer Portalwaschanlage 1 gezeigt, welche zum Reinigen eines stillstehenden Fahrzeugs F ein in Längsrichtung L der Portalwaschanlage 1 und somit auch des Fahrzeugs F verfahrbares Waschportal 2 aufweist. Das Waschportal 2 weist zwei Portalsäulen auf, von denen in den Zeichnungen lediglich die eine Portalsäule 3 gezeigt ist. Die Portalsäulen 3 werden oben über eine Portaltraverse 4 miteinander verbunden An der Portaltraverse 4 sind zwei vertikal nach unten hängende Seitenwaschbürsten angeordnet, von denen in den Zeichnungen nur die Seitenwaschbürste 5 gezeigt ist. Die Seitenwaschbürsten 5 können quer zur Längsrichtung L an der Portaltraverse 4 von außen nach innen und zurückbewegt werden. Zwischen den Portalsäulen 3 ist eine horizontale Dachwaschbürste 6 angeordnet, welche zwischen der in den Zeichnungen gezeigten oberen Stellung und einer bodennahen unteren Stellung hin und her bewegbar ist. An dem in Fig. 1 rechten Ende ist an der Portaltraverse 4 eine erste Auftragsvorrichtung 7 vorgesehen, während am linken Ende des Waschportals 2 an der Lagerung der Dachbürste 6 Sprüharme angeordnet sind, von denen wiederum nur der eine Sprüharm 8 erkennbar ist. Die Verwendung der Sprüharme 8 ergibt sich aus den bereits verwendeten Sprühsystemen üblicher Maschinenausführungen. Grundsätzlich ist die Ausführung des Sprühsystems auch mit jedem Anderen, auf der gezeigten Sprüharm-seitigen Portalseite gelegenen Sprühsystem, möglich.

Der Vorgang einer an sich bekannten Fahrzeugreinigung und -politur wird nun anhand der Figuren 1a bis 1d beschrieben. Dabei stellt das in den Zeichnungen mit durchgezogenen Linien gezeigte Waschportal 2 jeweils seine Anfangsstellung dar, während das mit gestrichelten Linien gezeichnete Waschportal 2 die Endstellung nach einem erfolgten Überlauf des Waschportals 2 über das Fahrzeug F kennzeichnet. Dabei kennzeichnet der Pfeil W die Behandlungsrichtung für einen solchen Überlauf in der einen Richtung, während der Pfeil w die Behandlungsrichtung in der anderen Fahrrichtung des Waschportals 2 kennzeichnet. Ein solcher Überlauf wird auch Überfahrt oder Vorbeifahrt bezeichnet.

Dabei wird in Figuren 1a und 1b das Fahrzeug beginnend von in Fig. 1a rechts mittels der Waschbürsten 5, 6 unter vorherigem oder gleichzeitigem Auftrag von Waschshampoo gereinigt, wobei in Fig. 1a und Fig. 1b voll aufgeweitete rotierende Waschbürsten gezeigt sind. Zwischen möglicherweise unterschiedlichen Bürsten-Rotationsrichtungen wird in dieser Beschreibung nicht unterschieden. Die Reinigung erfolgt in Behandlungsrichtung W vorwärts und Behandlungsrichtung w rückwärts, um die Fahrzeugoberflächen von beiden Richtungen mit den rotierenden Waschbürsten 5, 6 sauber reinigen zu können.

Wenn das Waschportal 2 nach dem zweiten Überlauf in die in Fig. 1b rechte Endstellung gefahren ist, wird nunmehr in einem in Fig. 1c gezeigten dritten Überlauf in Behandlungsrichtung W vorwärts aus dem Sprüharm 8 Poliermittel auf das Fahrzeug aufgetragen, wobei während des Überlaufs die Wachbürsten 5, 6 dann die Fahrzeugoberflächen in bekannter Weise polieren. Dabei wird das Fahrzeug F über die in Fig. 1c rechte Sprühvorrichtung 7 noch mit Spülflüssigkeit besprüht, um Rückstände des Shampoos und des Poliermittels abzuspülen. In dem in Fig. 1d gezeigten vierten Überlauf wird dann bei stehenden, herunterhängenden Waschbürsten 5, 6 ein Trocknungshilfsmittel aufgebracht, welches das Trocknen des Fahrzeugs in einem nachfolgenden, nicht gezeichneten Trocknungsüberlauf mittels an sich bekannter Trockendüsen erleichtert.

Aufgrund der nachfolgend beschriebenen Unterschiede des Bürstenshampoos und des Poliermittels muss die Reinigung mit dem Bürstenshampoo in Fig. 1a und Fig. 1b getrennt von dem nachfolgenden Poliervorgang mittels Auftragen des Poliermittels und der Bürstenbehandlung erfolgen. Dies ist u.a. auch deshalb nachteilig, da die Behandlung des Fahrzeugs mit den rotierenden Waschbürsten in Figuren 1a - 1c deutlich länger braucht, als wenn lediglich das Trocknungshilfsmittel, wie in Fig. 1d gezeigt, auf das Fahrzeug aufgebracht werden muss. Es ist deshalb gewünscht, den gesamten Behandlungsvorgang des Fahrzeugs zu beschleunigen, um einen höheren Durchsatz von zu waschenden Fahrzeugen in der Fahrzeugwaschanlage zu ermöglichen.

Bislang sind zur Reinigung und Politur im Wesentlichen zwei Mittel erforderlich. Zunächst erfolgt eine Reinigung mit einem so genannten Bürstenshampoo. Das Bürstenshampoo beruht auf Tensiden von nichtionischem, amphoterem und/oder anionischem Aufbau. Bürstenshampoos können ggf. mit Komplexbildnern oder Dispergatoren (z.B. Copolymeren) versetzt sein. Anschließend an die Reinigung mit dem Bürstenshampoo erfolgt ein Polier-Schritt respektive Polierschritt mit einem so genannten Poliermittel. Das Poliermittel kann hydrophil oder hydrophob ausgelegt sein, mit einem pH-Wert von 0 - 7 und wird auf der Basis von Glanzgebern und Hilfsstoffen, wie z.B. Emulgatoren formuliert.

Eine Aufgabe der vorliegenden Erfindung besteht unter anderem darin, die oben genannten Nachteile zu beseitigen und den zeitlichen Einsatz von Bürsten zu vermindern. Auch soll der Reinigungs- und Politurvorgang vereinfacht und beschleunigt werden, um unter anderem einen höheren Durchsatz an Fahrzeugen durch die Behandlungsanlage zu ermöglichen. Weiter wird eine Vereinfachung der Fahrzeugbehandlungsanlage und somit eine Reduktion der Kosten für die Anlage und deren Betrieb angestrebt.

Eine weitere Aufgabe besteht in der Vereinfachung des Formulierungsaufwandes der zur Fahrzeugreinigung und -Pflege (z.B. Polieren) erforderlichen Mittel.

Gelöst werden diese Aufgaben durch ein Verfahren zum Reinigen und Polieren eines Fahrzeugs mit den Merkmalen des Anspruchs 1, eine Fahrzeugbehandlungsanlage zur

Durchführung des Verfahrens mit den Merkmalen des Anspruchs 8 sowie ein kombiniertes wässriges Reinigungs- und Poliermittel, das Reinigungs- und Polier-Funktionen in sich vereinigt, mit den Merkmalen des Anspruchs 10. Bevorzugte Ausführungen und vorteilhafte Weiterbildungen der Erfindung sind in den abhängigen Ansprüchen angegeben.

Das eingangs genannte Verfahren zum Reinigen und Polieren eines Fahrzeugs ist gekennzeichnet durch die Schritte a) Applizieren eines kombinierten Reinigungs- und Poliermittels auf die Fahrzeugoberflächen des zu behandelnden Fahrzeugs, und b) Reinigen und Polieren der bereits mit dem kombinierten Reinigungs- und Poliermittel versehenen Fahrzeugoberflächen noch während und/oder unmittelbar nach dem Applizieren des Reinigungs- und Poliermittels auf diese Fahrzeugoberflächen.

Bevorzugt können die bereits mit Reinigungs- und Poliermittel versehenen Fahrzeugoberflächen innerhalb von 10 s, bevorzugt 5 s und besonders bevorzugt innerhalb von 3 s gereinigt und poliert werden.

Weiter können vorteilhaft bereits polierte Fahrzeugoberflächen noch während und/oder unmittelbar nach dem Polieren mit einer Spülflüssigkeit abgespült werden. Dabei kann die Spülflüssigkeit innerhalb von 60 s, bevorzugt 10 s und besonders bevorzugt innerhalb von 5 s auf die bereits polierten Fahrzeugoberflächen appliziert werden.

In einer vorteilhaften Ausgestaltung kann nach dem Abspülen mit der Spülflüssigkeit ein Trocknungshilfsmittel auf die Fahrzeugoberflächen appliziert wird, um die Trocknung des Fahrzeugs mit nachgeordneten Trocknungsdüsen zu vereinfachen.

Bevorzugt können die Fahrzeugoberflächen vor dem Applizieren des Reinigungs- und Poliermittels vorgereinigt werden, um grobe Verunreinigungen und sehr fest haftendenden Schmutz zu entfernen oder zumindest anzulösen.

Bevorzugt kann das Applizieren des kombinierten Reinigungs- und Poliermittels auf die Fahrzeugoberflächen des zu behandelnden Fahrzeugs auch durch mindestens eine rotierende Waschbürste erfolgen. Dies kann vorteilhaft dadurch geschehen, dass zunächst das Reinigungs- und Poliermittel auf die Waschbürste aufgebracht wird, und anschließend die rotierende Waschbürste in Kontakt mit den Fahrzeugoberflächen gebracht wird. Aufgrund der Rotation der Waschbürste bewegt sich das Reinigungs- und Poliermittels zu den äußeren Enden der Borsten der Waschbürste, von denen es zu einem gewissen Teil auf die Fahrzeugoberflächen geschleudert wird, bevor die Waschbürste in Kontakt mit den Fahrzeugoberflächen gelangt.

In einer vorteilhaften Ausführung kann die Fahrzeugbehandlungsanlage mindestens eine in eine Längsrichtung des Fahrzeugs gegenüber dem Fahrzeug verfahrbare Auftragsvorrichtung zum Applizieren des Reinigungs- und Poliermittels und mindestens eine Poliervorrichtung zum Polieren der Fahrzeugoberflächen aufweisen, wobei die Schritte a) und b) während einer Vorbeifahrt der Auftragsvorrichtung und der Poliervorrichtung am Fahrzeug in einer Waschrichtung ausgeführt werden. Dabei kann die Auftragsvorrichtung zum Applizieren des Reinigungs- und Poliermittels der Poliervorrichtung bevorzugt in Waschrichtung räumlich vorauseilen.

Weiter kann die Fahrzeugbehandlungsanlage eine Spülvorrichtung zum Applizieren einer Spülflüssigkeit aufweisen, wobei in einer vorteilhaften Fortbildung die Spülvorrichtung der Poliervorrichtung räumlich nacheilen kann.

Bevorzugt können die Auftragsvorrichtung und/oder Poliervorrichtung und/oder Spülvorrichtung an einem in Längsrichtung verfahrbaren Waschportal angeordnet sein.

Eine erfindungsgemäße Fahrzeugbehandlungsanlage zur Durchführung des oben und nachfolgend beschriebenen erfindungsgemäßen Verfahrens weist mindestens eine Auftragsvorrichtung zum Applizieren eines kombinierten Reinigungs- und Poliermittels, insbesondere wie oben und nachfolgend beschrieben, und mindestens eine Poliervorrichtung zum Polieren der Fahrzeugoberflächen auf.

Bevorzugt kann es sich bei der Fahrzeugbehandlungsanlage um eine Portalwaschanlage mit mindestens einer in eine Längsrichtung des Fahrzeugs gegenüber dem Fahrzeug verfahrbaren und in Waschrichtung vor der Poliervorrichtung angeordneten Auftragsvorrichtung zum Applizieren des Reinigungs- und Poliermittels handeln.

Die Poliervorrichtung kann vorteilhaft zugleich als Reinigungsvorrichtung ausgebildet sein, beispielsweise als drehbare Waschbürste.

In einer weiteren Ausgestaltung kann die Fahrzeugbehandlungsanlage eine Waschstraße mit einer Vorrichtung zum Transport des Fahrzeugs in eine Transportrichtung durch die Waschstraße sein, wobei eine Auftragsvorrichtung zum Applizieren des Reinigungs- und Poliermittels und eine dieser in Transportrichtung nachgeordnete kombinierte Reinigungsund Poliervorrichtung vorgesehen sein kann.

Überraschenderweise hat sich gezeigt, dass die Komponenten vom oben genannten Bürstenshampoo und vom oben genannten Poliermittel so kombiniert werden können, dass ihre jeweilige Funktion ohne gegenseitige Störung der Komponenten bei der Formulierung in einem einzigen Mittel bereitgestellt werden kann. Das gilt sowohl für hydrophobe als auch hydrophile Polier-Komponenten. Es hatte sich gezeigt, dass bei der Vereinigung von Komponenten eines derartigen Vielstoffsystems Störungen, wie Ausflockung, Verminderung oder gar Aufhebung von Funktionen etc., stattfinden. Daher musste sowohl bei der Auswahl der Komponenten für die erfindungsgemäßen Mittel als auch bei der Reihenfolge der Zugabe ihrer Komponenten eine Vielzahl von Randbedingungen beachtet werden. Die erfindungsgemäßen Mittel gewährleisten ein in jeder Beziehung - zur Reinigung und als Poliermittel - voll funktionsfähiges Produkt. Dadurch können Reinigungs- und Polierschritt vereinigt werden. In anderen Worten das erfindungsgemäße Produkt kann in einem angepassten bzw. optimierten Waschablauf verwendet werden, wobei das Produkt die Waschleistung eines herkömmlichen pH-neutralen Bürstenshampoos und die "pflegenden" Eigenschaften eines Polier-Produktes aufweist. Somit kann in einem einzigen Ablauf das Fahrzeug gewaschen und poliert werden.

Der Begriff "polieren" oder "Poliermittel" bezieht sich auf die glanzsteigernde Wirkung von bestimmten Zusätzen. In der Regel handelt es sich dabei um PDMS, d.h. Polydimethylsiloxan, Aminosiloxane, kationische Tenside, Fettsäureester und Wachse. Es hat sich überraschenderweise gezeigt, dass aus diesen Stoffen insbesondere die Gruppe a) Polycarboxylate oder eine Gruppe um b) Polydimethylsiloxan, diquaternär und/oder Fettaminethoxylate und/oder Fettsäureamid ethoxyliert, die Aufgabe der vorliegenden Erfindung besonders gut lösen. Erstere Gruppe hat sauren Charakter und letztere basischen Charakter. Aus diesem Grunde müssen darauf beruhende Poliermittel oder die erfindungsgemäßen kombinierten wässrigen Reinigungs- und Poliermittel entsprechend formuliert werden. Die "polier"-Stoffe verfüllen kleinste Beschädigungen der Lackoberfläche, sodass die Lackoberfläche einen höheren Glanz erlangt. Die Lackstruktur wird nivelliert. Außerdem wird ein Oberflächenschutz bereitgestellt.

Eine weitere Aufgabe des erfindungsgemäßen Mittels besteht darin, neben den gewünschten Reinigungs- und Polier-Funktionen in einem Schritt auch die Fahrzeugoberfläche derart vorzubereiten, dass anschließend an den erfindungsgemäßen Reinigungs- und Polier-Schritt und ggf. weiteren Schritten die nach dem Spülen verbliebenen Wasserreste mit einem Gebläse leicht entfernt werden können. Die Vorbereitung der Oberfläche für die Gebläsetrocknung erfolgt am effektivsten mit einer sauren, hydrophoben Poliervariante. Die Funktion der chemischen Trockenhilfe (CTH) wird durch ein solches Mittel am besten unterstützt. Eine pH-neutrale, hydrophile Polier-Variante unterstützt die Gebläsetrocknung per se nicht. Dazu könnte die Oberfläche ggfs. aber auch sauer gestaltet werden. Durch eine sauer gestaltete Oberfläche reißt ein Wasserfilm leichter auf und bietet dem aus dem Gebläse kommenden Luftstrom weniger Widerstand.

Die erfindungsgemäßen Formulierungen umfassen als Bestandteile einen oder mehrere als Glanzbildner und Lackpflege wirkende(n) Stoff(e), ein Wasch- und Reinigungssystem, das ein Reinigungs- und Dispergiersystem und einen Schaumbildner umfasst, ein pH-einstellendes Mittel, das zudem eine Wasch- oder Pflegefunktion optimieren und/oder unterstützen kann, ggf. einen Lösevermittler, ggf. Hilfsstoffe, wie Konservierungsmittel, Duft und Farbstoffe sowie Wasser als Grundlage.

Das hydrophile kombinierte wässrige Reinigungs- und Poliermittel umfasst
5 - 10 Gew.-% Polycarboxylate
1 - 10 Gew.-% ausgewählt aus ethoxylierten C10-C13 Alkoholen und Gemischen davon,
1 - 10 Gew.-% ausgewählt aus C8-18 Alkylamidopropyl-Betainen, Amin-C12-18-Alkyldimethyl-N-oxiden (C12-18 AO), N,N-Dimethyl-decanamin-N-oxid und Gemischen davon,
0 - 5 Gew.-% Natriumlaurethsulfat
1 - 5 Gew.-% 2-Butoxyethanol und/oder 2-(2-Butoxyethoxy)ethanol
ggf. Konservierungsmittel, Duft und Farbstoffe
auf 100 Gew.-% mit Leitungswasser oder enthärtetem Wasser oder vollentsalztem Wasser aufgefüllt.

Das hydrophobe kombinierte wässrige Reinigungs- und Poliermittel umfasst
1 - 10 Gew.-% Polydimethylsiloxan, diquaternär und/oder Fettaminethoxylate und/oder Fettsäureamid ethoxyliert
1 - 10 Gew.-% ausgewählt aus Alkohol C11, ethoxyliert, Alkohol C10, ethoxyliert, Alkohol C13, ethoxyliert, Alkohol C9 - 11 ethoxyliert, und Gemische davon,
1 - 10% Gew.-% ausgewählt aus C8-18 Alkylamidopropyl-Betainen, Amin-C12-18-Alkyldimethyl-N-oxiden (C12-18 AO), N,N-Dimethyl-decanamin-N-oxid und Gemischen davon,
0 - 5 Gew.-% ausgewählt aus 2-Butoxyethanol, 2-(2-Butoxyethoxy)ethanol, 3-Butoxypropan-2-ol, 1-Propoxypropan-2-ol und Gemischen davon,
ggf. Konservierungsmittel, Duft und Farbstoffe
auf 100 Gew.-% mit Leitungswasser oder enthärtetem Wasser oder vollentsalztem Wasser aufgefüllt.

Polycarboxylate sind Polymere, die eine verhältnismäßig hohe Anzahl an Carboxygruppen tragen. Sie können durch Polymerisation von (Meth)acrylsäure, Maleinsäure, Itaconsäure und ähnlichen polymerisierbaren ungesättigten Di- oder Multicarbonsäuren hergestellt werden.

Ethoxylierte C10-C13 Alkohole bestehen aus einem C10-, C11-, C12- oder C13-Alkohol oder Gemischen davon, sowie einem - in der Regel durch Ethoxylierung mit Ethylenoxid erhaltenen - Polyethylenoxid-Rest. Sie besitzen die Formel R1-(-O-CH2-CH2)n-OH, wobei n für Reinigungszwecke vorzugsweise 2-6, bevorzugter 4-5 beträgt und für Dispergierungs- und Emulgierungszwecke vorzugsweise 7-13, bevorzugter 7-9 beträgt. Demzufolge können Gemische von ethoxylierten C10-C13 Alkoholen mit unterschiedlichen Anteilen an Ethoxyethylen-Ketten je nach Funktion eingesetzt werden.

Amin-C12-18-alkyldimethyl-N-oxide (INCI-Name = Amines, C12-18-alkyldimethyl, N-oxides) sind Verbindungen mit einer Amin-N-oxid-Funktionalität.
C8-18 Alkylamidopropyl-Betaine haben den chemischen Aufbau:
R-(C=O)-NH-(CH2)n-[N(CH3)2]+-CH2-(C=O)-O⁻ Me+ X-, worin R C4-C20, vorzugsweise C7-C17-Alkyl darstellt, n 0-3 ist, Me ein Kation, vorzugsweise ein Alkalimetallkation oder ein Ammoniumkation darstellt, und X ein Anion, vorzugsweise Chlorid, oder Sulfat darstellt. Mehrwertige Ionen treten in den jeweiligen Bruchteilen auf.

N,N-Dimethyl-decanamin-N-oxid ist auch unter dem INCI-Namen Decanamine, N,N-dimethyl-, N-oxide bekannt.

Natriumlaurethsulfat (INCI-Name Laureth sulfate) oder Natriumdodecylpoly(oxyethylen)sulfat ist ethoxyliertes Natriumlaurylsulfat und hat die chemische Formel Na+ -O-[S(=O)2]-O-(CH2-CH2-O-)n-(CH2)m-CH3 wobei m=11 und n eine beliebige Zahl, z.B. 1-8, vorzugsweise 1-3, insbesondere 2, ist.

Polydimethylsiloxan, diquaternär auch diquaternary polydimethylsiloxane ist ein Siloxan mit zwei vorzugsweise endständigen quaternären Ammoniumgruppen.

Fettaminethoxylate werden durch Ethoxylierung von Alkylaminen erhalten. In der Regel haben sie den Aufbau R-N[(CH2-CH2-O)xH]2, wobei R = C4-C26, vorzugsweise C10-C18, x kann von 1 bis 15 betragen und gleich oder verschieden sein. R kann gesättigt oder ungesättigt sein, vorzugsweise ist R ungesättigt.

Ethoxyliertes Fettsäureamid oder auch "ethoxylated fatty acid amides" können beispielsweise 12-18 Kohlenstoffatome im Fettsäureteil und 2 bis 8 Ethylenoxid-Einheiten aufweisen. Der Fettsäurerest kann gesättigt oder ungesättigt sein und ist vorzugsweise ungesättigt.

Die Produkte werden durch miteinander Vermischen hergestellt, wobei gegebenenfalls das Lösemittel dazu dient, das Mittel klar einzustellen und die Standzeit und Temperaturrobustheit zu verbessern. Der Fachmann wird die korrekte Reihenfolge je nach gewählter erster Komponente wählen.

Durch Zusatz von Säure wird das hydrophobe kombinierte wässrige Reinigungs- und Poliermittel auf einen pH-Wert von vorzugsweise 0-4 eingestellt. Bevorzugt ist der Einsatz von saurem Phosphorsäureester, weil der Stoff nicht so korrosiv wirkt wie Phosphorsäure an sich. Der Einsatz von Essigsäure oder Glykolsäure ist alternativ möglich. Zum besseren Ablaufverhalten von Wasser ist eine protonisierte Gestaltung der Lackoberfläche bevorzugt, wie bereits oben erläutert. Beim hydrophilen kombinierten wässrigen Reinigungs- und Poliermittel werden Polyacrylate, d.h. Salze, eingesetzt, die jedoch in der Regel neutral bis basisch reagieren. Die Vorbereitung zum Trockenblasen muss dann zusätzlich vor oder während des Schritts der CTH erfolgen.

Bevorzugt kann das erfindungsgemäße Reinigungs- und Poliermittel keine abrasiven und/oder lacklösenden Inhaltsstoffe enthalten, um den Lack der zu reinigenden und polierenden Fahrzeuge nicht anzugreifen oder zu beschädigen.

Die Erfindung wird nun detailliert anhand der nachfolgenden Ausführungsbeispiele und der begleitenden Zeichnungen beschrieben. Diese zeigen:
- **Fig. 1**: eine Seitenansicht einer bekannte Fahrzeugbehandlungsanlage in Form einer Portalwaschanlage mit Schritten eines bekannten Behandlungsverfahrens;
- **Fig. 2**: eine Seitenansicht einer erfindungsgemäßen Fahrzeugbehandlungsanlage in Form einer Portalwaschanlage mit Schritten eines erfindungsgemäßen Behandlungsverfahrens zum Reinigen und Polieren des Fahrzeugs;
- **Fig. 3**: die Fahrzeugwaschanlage aus Fig. 2 mit Schritten eines alternativen erfindungsgemäßen Behandlungsverfahrens;
- **Fig. 4**: die Fahrzeugwaschanlage aus Fig. 2 mit Schritten eines alternativen erfindungsgemäßen Behandlungsverfahrens;
- **Fig. 5**: eine Seitenansicht auf eine alternative bekannte Fahrzeugbehandlungsanlage in Form einer Waschstraße zur Durchführung eines bekannten Behandlungsverfahrens;
- **Fig. 6**: eine Seitenansicht auf eine alternative erfindungsgemäße Fahrzeugwaschanlage in Form einer Waschstraße zur Durchführung eines alternativen erfindungsgemäßen Behandlungsverfahrens.

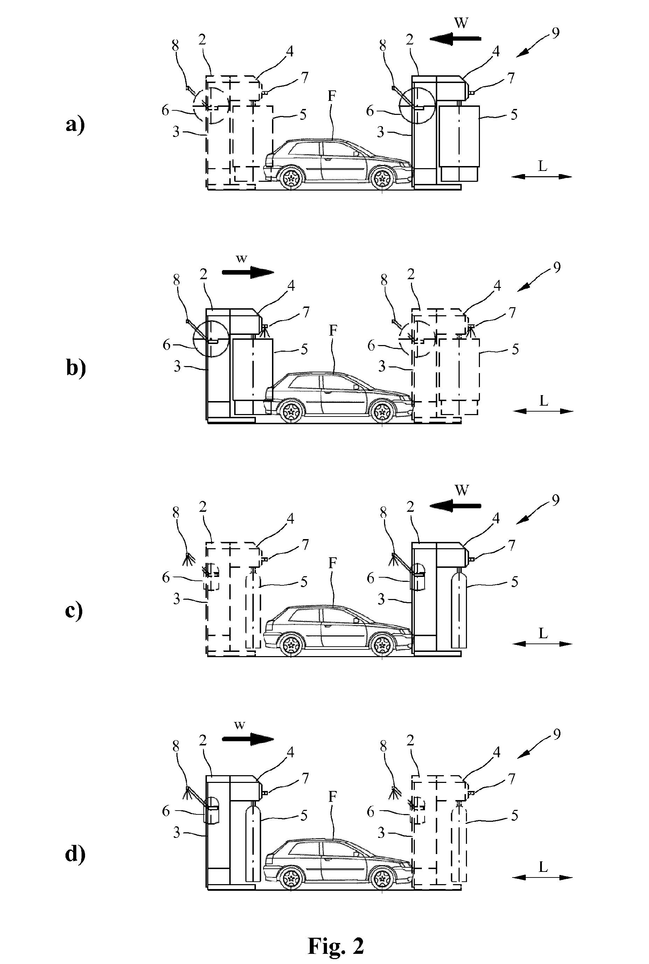

Soweit sich die in Figuren 2 bis 4 gezeigten Bestandteile der erfindungsgemäßen Fahrzeugbehandlungsanlagen mit denen der in Fig. 1 gezeigten an sich bekannten Fahrzeugwaschanlage 2 gleichen, werden für gleiche oder entsprechende Teile gleiche Bezugszeichen und gleiche Bezeichnungen verwendet. Die oben zu Fig. 1 gemachten Ausführungen gelten entsprechend, wobei nachfolgend bevorzugt auf die Unterschiede der erfindungsgemäßen Fahrzeugbehandlungsanlagen in Fig. 2 bis 4 eingegangen wird. Wenn im nachfolgenden von der Reinigung des Fahrzeugs gesprochen wird, so ist damit die Reinigung der nicht dem Boden zugewandten Fahrzeugoberflächen gemeint, also der Front- und Heckflächen, der Seitenflächen, der Motor- und Kofferraumhaube, der Windschutzscheibe, der Heckscheibe, des Dachs und, soweit von den Waschbürsten erreichbar, auch der Fahrzeugräder.

Fig. 2 zeigt vier Schritte eines Behandlungsvorgangs in einer erfindungsgemäßen Fahrzeugbehandlungsanlage 9. Der in Fig. 2a gezeigte erste Waschüberlauf des Waschportals 2 über das Fahrzeug F beginnt in Fig. 2a rechts und entspricht dem in Fig. 1a gezeigten und dort beschriebenen Reinigungsvorgang mit Bürstenshampoo und rotierenden Waschbürsten 5, 6. Wenn das Waschportal 2 dann am in Fig. 2 linken Ende des Reinigungsvorgangs angelangt ist, wird beginnend von in Fig. 2b links in einem zweiten Überlauf über die erste Sprühvorrichtung 7 das neue, erfindungsgemäße kombinierte Reinigungs- und Poliermittel auf das Fahrzeug F aufgebracht. Dabei werden die Fahrzeugoberflächen mit den rotierenden Waschbürsten 5, 6 vom Heck zur Front das Fahrzeug F durch das gleichzeitige Applizieren des kombinierten Reinigungs- und Poliermittels in einem Überlauf des Waschportals 2 sowohl gereinigt als auch poliert. Somit können die beiden in Fig. 1b und 1c gezeigten getrennten Wasch- bzw. Polierüberläufe in einem Überlauf nach Fig. 2b erledigt werden. Hierdurch lässt sich die für den Wasch- und Poliervorgang notwendige Zeit um rund ein Drittel verkürzen, da lediglich zwei Überläufe (Fig. 2a und 2b) anstatt dreier Überläufe (Fig. 1a - 1c) nötig sind.

In dem anschließenden Spülüberlauf in Fig. 2c wird dann lediglich aus der durch Sprüharme 8 gebildeten zweiten Auftragsvorrichtung, beginnend von in Fig. 2c rechts Spülflüssigkeit auf das Fahrzeug F aufgebracht, um die Rückstände der in den vorangehenden Überläufen aufgebrachten Mittel abzuspülen. Dabei kann die erste bzw. zweite Auftragsvorrichtung in an sich bekannter Weise ausgebildet sein und Sprühdüsen, Sprühbögen, Einzel- und Gruppendüsen, Flachstrahl- oder Punktstrahldüsen, Düsen mit festem oder beweglichem Strahl etc. umfassen.

Der in Fig. 2d gezeigte Überlauf entspricht dann wieder dem in Fig. 1d gezeigten Überlauf, nämlich Aufbringen von Trocknungshilfsmittel aus den Sprüharmen 8. Da das Abspülen des Fahrzeugs F in Fig. 2c deutlich schneller vonstatten geht als der getrennte Polierüberlauf in Fig. 1c, kann durch das oben beschriebene Verfahren deutlich Zeit eingespart und somit der Durchsatz an Fahrzeugen F gesteigert werden.

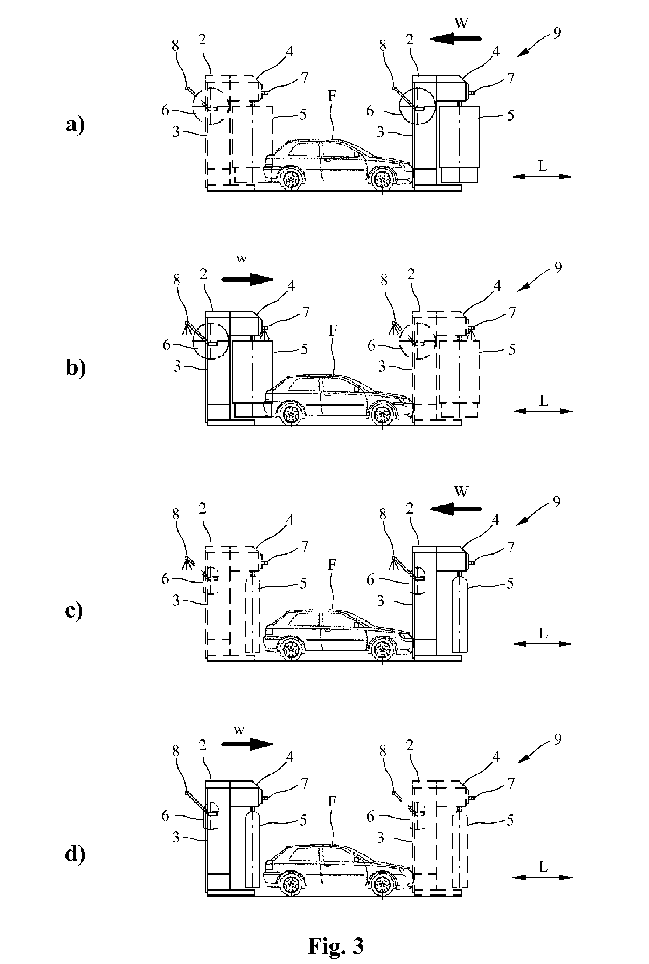

In Fig. 3 ist ein alternatives erfindungsgemäßes Verfahren beschrieben, durch welches sich die Behandlung des Fahrzeugs F noch weiter beschleunigen lässt.

Dabei entspricht der in Fig. 3a gezeigte erste Reinigungsüberlauf unter Aufbringen von Bürstenshampoo und Waschen mit den rotierenden Waschbürsten dem in Fig. 1a bzw. 2a gezeigten Vorgang.

Anschließend kann im Unterschied zu dem erfindungsgemäßen Verfahren aus Fig. 2 eine weitere Beschleunigung des Waschvorgangs dadurch erzielt werden, dass zusätzlich zu dem in Fig. 2b gezeigten Aufbringen des kombinierten Reinigungs- und Poliermittels aus der ersten Auftragsvorrichtung 7 unter gleichzeitigem rotierenden Waschen und Polieren mit den Waschbürsten 5, 6 zusätzlich aus den in Waschrichtung w räumlich nacheilenden Sprüharmen 8 bereits Spülflüssigkeit aufgebracht wird. Die Spülflüssigkeit wird somit aufgrund der räumlich nach hinten versetzten Sprüharme 8 auch zeitlich nacheilend zum Auftrag des kombinierten Reinigungs- und Poliermittels und dessen Einarbeitung mittels der rotierenden Waschbürsten 5, 6 aufgebracht. Somit können die in Fig. 1b und 1c bzw. Fig. 2b und 2c gezeigten, voneinander getrennten Schritte in einen einzigen Schritt nach Fig. 3b zusammengefasst werden, so dass die in Fig. 1c bzw. 2c notwendige Zeit für das getrennte Auftragen der Spülflüssigkeit vollständig entfällt.

Im anschließenden in Fig. 3c gezeigten Überlauf wird wieder Trocknungshilfsmittel aufgebracht, wie in Fig. 1d bzw. 2d gezeigt, um die Trocknung des Fahrzeugs F in dem in Fig. 3d gezeigten Trocknungsüberlauf zu erleichtern. Wie bei einem Vergleich mit Fig. 1 und 2 erkennbar, kann somit das Fahrzeug F bereits im vierten Überlauf des Waschportals 2 in Fig. 3d getrocknet werden, während sich dieser Trocknungsüberlauf bei den beiden anderen Verfahren noch als fünfter Schritt anschließt.

Dies weist den Vorteil auf, dass bei derartigen Portalwaschanlagen 1 bzw. 9 die Fahrzeugbehandlung stets vom gleichen Startpunkt aus erfolgen soll, bei den in Fig. 1 bis 3 gezeigten Vorgängen also von rechts. Schließt sich jedoch bei den in Fig. 1 und 2 gezeigten vier Überläufen des Waschportals 2 noch ein fünfter Überlauf für die Trocknung des Fahrzeugs F, üblicherweise mit Trocknungsdüsen, an, so beginnt dieser in Fig. 1 bzw. 2 rechts und endet dann am linken, heckseitigen Ende. Das Waschportal 2 muss dann von der linken Stellung zum Behandeln des nächsten Fahrzeugs wieder ganz zurück in die rechte Stellung in Fig. 1a bzw. 2a gefahren werden. Diese Leerfahrt des Waschportals 2 benötigt zum einen Zeit und zum anderen Antriebsenergie, was beides unerwünscht ist. Da sich bei solchen Portalwaschanlagen 1 der Fahrer des Fahrzeugs F während des Waschvorgangs üblicherweise außerhalb des Fahrzeugs befindet, verzögert sich der gesamte Behandlungsvorgang zusätzlich, denn erst wenn das Waschportal 2 wieder in der in Fig. 1a bzw. 2a gezeigten rechten Startstellung angelangt ist, kann der Fahrer wieder in das Fahrzeug F einsteigen und es aus der Portalwaschanlagen 1 herausfahren.

Demgegenüber entfällt dieser zeitraubende Vorgang mit zwei zusätzlichen Überläufen bei den in Fig. 1 und 2 gezeigten Ausführungen - Trocknungsüberlauf in Waschrichtung W von rechts nach links und anschließende Leerfahrt in Waschrichtung w von links nach rechts - bei der in Fig. 3 gezeigten Ausführung.

Aber selbst wenn der Fahrer bei der Durchführung des Waschvorgangs im Fahrzeug verbleiben kann, beispielsweise bei Portalwaschanlagen mit einander gegenüberliegender Einfahrt und Ausfahrt, so kann das Fahrzeug unmittelbar nach dem in Fig. 3d gezeigten Ende des Trocknungsüberlaufs ausgefahren werden.

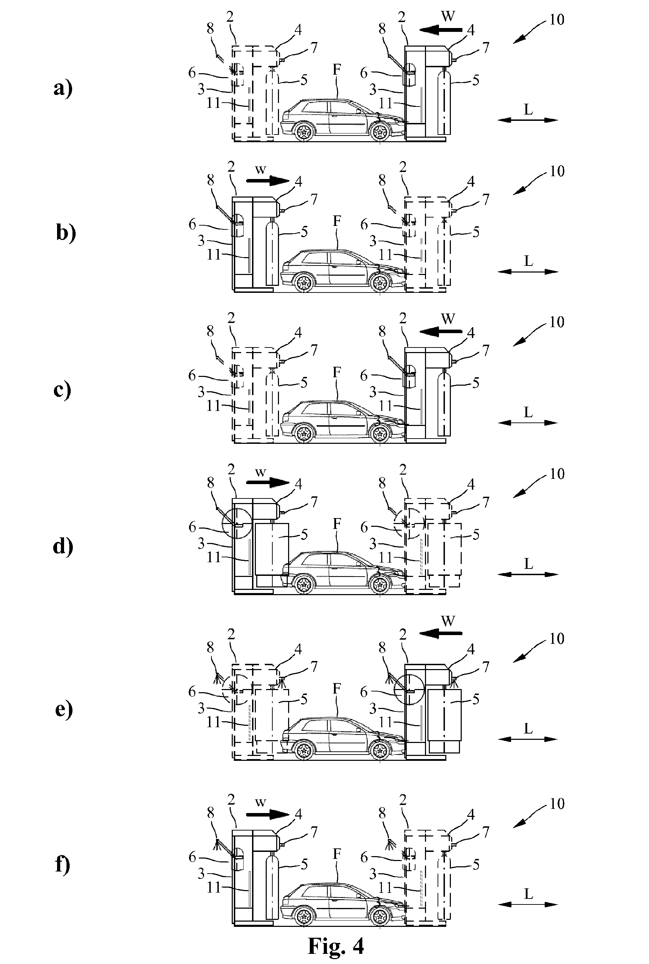

Bei der in Fig. 4 gezeigten Ausführung einer alternativen Fahrzeugbehandlungsanlage 10 handelt es sich um eine geringfügig von der in Fig. 3 gezeigten Ausführung unterschiedliche Variante. Diese kann vorteilhaft in Gegenden eingesetzt werden, in denen regelmäßig mit sehr starker Verschmutzung des Fahrzeugs gerechnet werden muss, beispielsweise in nördlichen Regionen mit sehr viel Regen, Schnee und damit verbunden großem Schmutzeintrag auf die Fahrzeugoberflächen.

So wird dort zunächst in den Fig. 4a - c gezeigten drei Überläufen des Waschportals 2 im ersten Überlauf eine chemische Vorwäsche durchgeführt (Fig. 4a), anschließend Schaum bzw. Shampoo in einem zweiten Überlauf aufgetragen (Fig. 4b) und dann mittels Hochdrucksprühvorrichtungen 11 der Schaum/Shampoo in der dritten Überfahrt zusammen mit dem angelösten starken Schmutz mittels Hochdruck abgesprüht (Fig. 4c). Anschließend beginnt der in Fig. 3a bis 3c gezeigte und dort beschriebene Reinigungs- und Poliervorgang mit dem Unterschied, dass der Reinigungsvorgang in Fig. 4d entsprechend Fig. 3a am Heck des Fahrzeugs F beginnt und nicht an der Front. Entsprechend beginnt dann das Aufbringen des kombinierten Reinigungs- und Poliermittels nebst unmittelbar nachfolgendem Aufbringen der Spülflüssigkeit in Fig. 4e entsprechend Fig. 3b von rechts und nicht von links wie in Fig. 3b. Deshalb wird das kombinierte Reinigungs- und Poliermittel in Fig. 4e entsprechend Fig. 3c mittels der Sprüharme 8 aufgebracht, während die Spülflüssigkeit mittels der in Waschrichtung W räumlich nach hinten versetzten ersten Sprühvorrichtung 7 und somit zeitlich nach dem Auftrag des kombinierten Reinigungs- und Poliermittels erfolgt. Der anschließende in Fig. 4f entsprechend Fig. 3c gezeigte Auftrag des Trocknungshilfsmittels erfolgt dann wieder über die Sprüharme 8, und daran schließt sich dann ein weiterer, zeichnerisch nicht dargestellter Überlauf zum Trocknen des Fahrzeugs an, welcher dem in Fig. 3d gezeigten Überlauf in umgekehrter Waschrichtung W von rechts nach links entspricht.

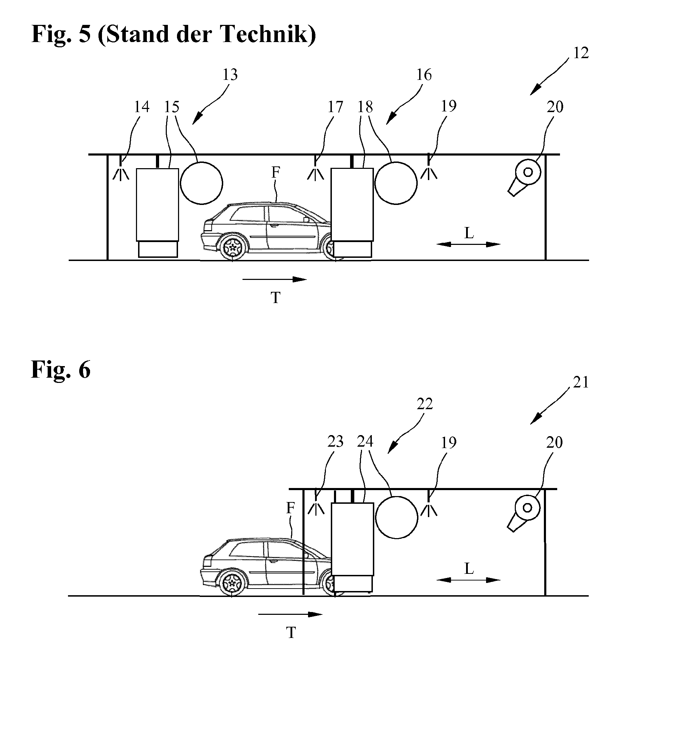

Anstelle des in den Ausführungsbeispielen beschriebenen Waschvorgangs bei einer Portalwaschanlage 9, 10 kann das erfindungsgemäße Reinigungs- und Poliermittel und das erfindungsgemäße Behandlungsverfahren auch bei anderen Arten von Fahrzeugbehandlungsanlagen eingesetzt werden, beispielsweise bei den in Fig. 5 und 6 gezeigten Waschstraßen, bei denen das Fahrzeug F in eine Transportrichtung T an den in Längsrichtung L nicht oder nur wenig beweglichen Behandlungseinrichtungen vorbeitransportiert wird.

So zeigt Fig. 5 eine an sich bekannte Waschstraße 12 mit einer Reinigungsstation 13 mit einer ersten Auftragsvorrichtung 14 für Bürstenshampoo und nachgeordneten rotierenden Seitenund Dachwaschbürsten 15 zum Reinigen des Fahrzeugs F. Zum Polieren des Fahrzeugs ist dann eine nachgeordnete Polierstation 16 vorgesehen, in der das Poliermittel mittels einer zweiten Auftragsvorrichtung 17 auf das Fahrzeug F aufgebracht wird und mit einem zweiten Satz von Wasch- bzw. Polierbürsten 18 die Politur der Fahrzeugoberflächen erfolgt. Daran schließt sich eine Spülvorrichtung 19 zum Abspülen von Resten der in den vorangegangenen Schritten auf den Fahrzeugoberflächen verbliebenen Mittel an. Ggf. kann mit der Spülvorrichtung 19 oder einer nachgeordneten, nicht gezeigten Auftragsvorrichtung auch ein Trocknungshilfsmittel aufgebracht werden. Anschließend wir das Fahrzeug F mit einer bekannten Trocknungsdüse 20 getrocknet.

Durch die beiden voneinander getrennten Reinigungs- und Polierstationen 13 bzw. 16 benötigt die Waschstraße 12 eine große Länge, was dann oft auch eine entsprechend lange und somit platzraubende und teure Waschhalle erfordert. Zudem müssen zwei Sätze von Wasch- bzw. Polierbürsten 15 und 18 bereitgehalten werden, verbunden mit dem hierfür notwendigen Verkabelungs- und Verrohrungsaufwand sowie Bereithaltung leistungsstärkerer Pumpen und Stromversorgungstechnik. Im Betrieb ist dann ein hoher Energiebedarf für den Antrieb der getrennten Wasch- bzw. Polierbürsten 15 und 18 notwendig.

Im Gegensatz dadurch lassen sich durch eine erfindungsgemäße Waschstraße 21 deutliche Verbesserungen und Einsparungen erzielen. Denn dort wird statt der einzelnen Reinigungsstation 13 und Polierstation 16 nur eine gemeinsame Reinigungs- und Polierstation 22 benötigt, welche nur eine Auftragsvorrichtung 23 für das kombinierte Reinigungs- und Poliermittel und nur einen Satz rotierender Seiten- und Dachwasch- und Polierbürsten 24 zum gemeinsamen Reinigen und Polieren des Fahrzeugs F aufweist. Dadurch baut diese erfindungsgemäße Waschstraße 21 deutlich kürzer, so dass sich deutliche Platzeinsparungen und Kosteneinsparungen beim Bau (geringere Hallenlänge, geringerer Verkabelungs- und Verrohrungsaufwand), bei der Ausrüstung und beim Betrieb der Waschstraße 10 ergeben.

## Patentansprüche

1. Verfahren zum Reinigen und Polieren eines Fahrzeugs (F) in einer Fahrzeugbehandlungsanlage (9; 10; 21), **gekennzeichnet durch** die Schritte
a) Applizieren eines kombinierten Reinigungs- und Poliermittels auf die Fahrzeugoberflächen des zu behandelnden Fahrzeugs (F), und
b) Reinigen und Polieren der bereits mit Reinigungs- und Poliermittel versehenen Fahrzeugoberflächen noch während und/oder unmittelbar nach dem Applizieren des Reinigungs- und Poliermittels auf diese Fahrzeugoberflächen.

2. Verfahren nach Anspruch 1, **dadurch gekennzeichnet, dass** die bereits mit Reinigungs- und Poliermittel versehenen Fahrzeugoberflächen innerhalb von 10 s, bevorzugt 5 s und besonders bevorzugt innerhalb von 3 s gereinigt und poliert werden.

3. Verfahren nach Anspruch 1 oder 2, **dadurch gekennzeichnet, dass** bereits polierte Fahrzeugoberflächen noch während und/oder unmittelbar nach dem Polieren mit einer Spülflüssigkeit abgespült werden.

4. Verfahren nach Anspruch 3, **dadurch gekennzeichnet, dass** die Spülflüssigkeit innerhalb von 60 s, bevorzugt 10 s und besonders bevorzugt innerhalb von 5 s auf die bereits polierten Fahrzeugoberflächen appliziert wird.

5. Verfahren nach einem der voranstehenden Ansprüche, **dadurch gekennzeichnet, dass** die Fahrzeugbehandlungsanlage (9; 10) mindestens eine in eine Längsrichtung (L) des Fahrzeugs (F) gegenüber dem Fahrzeug verfahrbare Auftragsvorrichtung (7; 8) zum Applizieren des Reinigungs- und Poliermittels und mindestens eine Poliervorrichtung (5, 6) zum Polieren der Fahrzeugoberflächen aufweist und die Schritte a) und b) während einer Vorbeifahrt der Auftragsvorrichtung (7; 8) und der Poliervorrichtung (5, 6) am Fahrzeug (F) in einer Waschrichtung (w; W) ausgeführt werden.

6. Verfahren nach Anspruch 5, **dadurch gekennzeichnet, dass** die Auftragsvorrichtung (7; 8) zum Applizieren des Reinigungs- und Poliermittels der Poliervorrichtung (5, 6) in Waschrichtung (w; W) räumlich vorauseilt.

7. Verfahren nach einem der voranstehenden Ansprüche, **dadurch gekennzeichnet, dass** die Fahrzeugbehandlungsanlage (9; 10; 21) eine Spülvorrichtung (8; 7; 19) zum Applizieren einer Spülflüssigkeit aufweist, insbesondere wobei die Spülvorrichtung (8; 7) der Poliervorrichtung (5, 6) räumlich nacheilt.

8. Fahrzeugbehandlungsanlage (9; 10; 21) zur Durchführung des Verfahrens nach einem der Ansprüche 1 bis 7 mit mindestens einer Auftragsvorrichtung (7; 8; 23) zum Applizieren eines kombinierten Reinigungs- und Poliermittels, insbesondere nach einem der Ansprüche 10 bis 16, und mindestens einer Poliervorrichtung (5, 6) zum Polieren der Fahrzeugoberflächen.

9. Fahrzeugbehandlungsanlage (9; 10) nach Anspruch 8, **dadurch gekennzeichnet, dass** die Fahrzeugbehandlungsanlage eine Portalwaschanlage (9; 10) mit mindestens einer in eine Längsrichtung (L) des Fahrzeugs (F) gegenüber dem Fahrzeug (F) verfahrbaren und in Waschrichtung (w; W) vor der Poliervorrichtung (5, 6) angeordnete Auftragsvorrichtung (7; 8) zum Applizieren des Reinigungs- und Poliermittels ist, oder dass die Fahrzeugbehandlungsanlage eine Waschstraße (21) mit einer Vorrichtung zum Transport des Fahrzeugs (F) in eine Transportrichtung (T) durch die Waschstraße (21) ist, wobei eine Auftragsvorrichtung (23) zum Applizieren des Reinigungs- und Poliermittels und eine dieser in Transportrichtung (T) nachgeordnete kombinierte Reinigungs- und Poliervorrichtung (22) vorgesehen ist.

10. Kombiniertes wässriges Reinigungs- und Poliermittel, umfassend einen oder mehrere als Glanzbildner und Lackpflege wirkende(n) Stoff(e), ein Waschund Reinigungssystem, das ein Reinigungs- und Dispergiersystem und einen Schaumbildner umfasst, und ggf. ein pH-einstellendes Mittel, ggf. einen Lösevermittler, und ggf. zusätzliche Hilfsstoffe.

11. Mittel nach Anspruch 10, wobei der Glanzbildner hydrophil oder hydrophob ausgelegt ist.

12. Mittel nach Anspruch 11, wobei das hydrophile Mittel nachstehende Bestandteile umfasst:
5 - 10 Gew.-% Polycarboxylate
1 - 10 Gew.-% ausgewählt aus ethoxylierten C10-C13 Alkoholen und Gemischen davon,
1 - 10 Gew.-% ausgewählt aus C8-18 Alkylamidopropyl-Betainen, Amin-C12-18-Alkyldimethyl-N-oxiden (C12-18 AO), N,N-Dimethyl-decanamin-N-oxid und Gemischen davon,
0 - 5 Gew.-% Natriumlaurethsulfat
1 - 5 Gew.-% 2-Butoxyethanol und/oder 2-(2-Butoxyethoxy)ethanol
ggf. Konservierungsmittel, Duft- und Farbstoffe
auf 100 Gew.-% mit Leitungswasser oder enthärtetem Wasser oder vollentsalztem Wasser aufgefüllt.

13. Mittel nach Anspruch 11, wobei das hydrophobe Mittel nachstehende Bestandteile umfasst:
1 - 10 Gew.-% Polydimethylsiloxan, diquaternär und/oder Fettaminethoxylate und/oder Fettsäureamid ethoxyliert
1 - 10 Gew.-% ausgewählt aus Alkohol C11, ethoxyliert, Alkohol C10, ethoxyliert, Alkohol C13, ethoxyliert, Alkohol C9 - 11 ethoxyliert, und Gemischen davon,
1 - 10% Gew.-% ausgewählt aus C8-18 Alkylamidopropyl-Betainen, Amin-C12-18-Alkyldimethyl-N-oxiden (C12-18 AO), N,N-Dimethyl-decanamin-N-oxid und Gemischen davon,
0 - 5 Gew.-% ausgewählt aus 2-Butoxyethanol, 2-(2-Butoxyethoxy)ethanol, 3-Butoxypropan-2-ol, 1-Propoxypropan-2-ol und Gemischen davon,
ggf. Konservierungsmittel, Duft und Farbstoffe auf 100 Gew.-% mit Leitungswasser oder enthärtetem Wasser oder vollentsalztem Wasser aufgefüllt.

14. Mittel nach einem der Ansprüche 10 bis 13, wobei das pH-einstellende Mittel eine Säure ist und der pH-Wert des fertigen Produkts von 0-9 beträgt.

15. Mittel nach einem der Ansprüche 10 bis 14 zur Verwendung bei der Reinigung und Pflege von Fahrzeugen (F).

16. Mittel nach einem der Ansprüche 10 bis 15, wobei das Mittel keine abrasiven und/oder lacklösenden Inhaltsstoffe enthält.
